# EUROPEAN PATENT APPLICATION

(11) **EP 1 431 635 A2**
(43) Date of publication of application: **23.06.2004**
(21) Application number: 03104699.8
(22) Date of filing: 15.12.2003
(51) Int. Cl.: F16K 11/078, F16K 11/074

(54) **Delivery and mixing device for fluids**

(30) Priority: 17.12.2002 IT UD20020263
(71) Applicant: Nuova Galatron S.r.l., 46043 Castiglione D/Stiviere (Mantova) (IT)
(72) Inventor: Sarasini, Gabriele, 25061 Bovegno (BS) (IT)
(74) Representative: Petraz, Gilberto Luigi

(57) **Abstract**

Delivery and mixing device (10) for fluids, comprising a monoblock body (11) and a mixer valve (13) of the type with a cartridge provided with a hollow cartridge body (213) arranged inside an inner seating (12) of the monoblock body (11). The mixer valve (13) is associated with at least a feed pipe (19, 20) for the fluids. The device (10) comprises anchoring members (17, 18) integrated with the mixer valve (13), which allow at least a feed pipe (19, 20) to be connected and positioned directly on the mixer valve (13).

## Description

### FIELD OF THE INVENTION

The present invention concerns a delivery and mixing device for one or more fluids, such as for example for the delivery and mixing of hot and cold water, comprising a monoblock body from which the mixed water is delivered, and inside which a cartridge-type mixer valve is able to be inserted, comprising a cartridge body in which the members to mix the hot and cold water are assembled.

To be more exact, the present invention is characterized in that it comprises anchoring means completely integrated into the cartridge, which allow to connect and position directly onto the latter the feed pipes for the fluids, without needing external centering, positioning and/or attachment elements arranged on and/or cooperating with the monoblock body of the delivery and mixing device.

In the following description, for greater ease of comprehension, we shall make specific reference to delivery and mixing devices for fluids installed in plants or sanitary installations for domestic use. This limitation has a descriptive character only, since the present invention can be applied in industrial fluid-dynamic plants too, or in any other applications where it is required to mix and deliver one or more fluids.

### BACKGROUND OF THE INVENTION

Delivery and mixing devices for fluids, hereafter more simply taps, are known and are used normally in sanitary installations such as wash basins, bath tubs, showers, bidets or suchlike. Such devices generally comprise a monoblock body, inside which a mixer valve is arranged, for example of the single command cartridge type, provided with a plurality of platelets made of ceramic material or similar, superimposed one on top of the other, of which one fixed and at least one movable.

The ceramic platelets have mating holes, associated with the respective hot water and cold water feed pipes, and also a hole through which the mixed water exits.

By modifying the position of the movable platelet with respect to the fixed one, the two feed deliveries are varied and hence the temperature and delivery of the mixed water.

One disadvantage of known taps is due to the fact that they normally have specific anchoring means, outside the mixer cartridge, in order to connect them with the feed pipes for the fluids.

This disadvantage leads to the necessity of providing specific attachment plates anchored to an internal surface of the monoblock body of the tap, and provided with holes for the coupling, positioning and clamping of the feed pipes.

These attachment plates can be anchored to the monoblock body of the tap in various ways, for example by means of welding, or using a reference element, such as a pin, or a key, made integrally with the monoblock body itself or otherwise. All the aforementioned solutions, however, have disadvantages with regard to the accessory operations which they require, and due to the need to use front washers.

More generally, known solutions to attach the feed pipes have the following disadvantages: they do not allow any intervention on, and/or replacement of, the feed pipes without first having to release them from the mixer cartridge; they do not allow to use flexible pipes inserted from above, before the mixer cartridge has been positioned, if they have connections using a hexagonal nut; the monoblock body of the tap must necessarily provide a positioning base for the feed pipes and for the mixer cartridge; they do not allow to make monoblock bodies of the type that is completely open at the lower part.

DE-U-8.507.823 discloses a tap that, in order to connect the feed pipes to the mixer cartridge, uses a separate piece made of plastic material independent of the cartridge; this solution, having the anchoring means of the pipes separate from the cartridge, is subject to the aforesaid disadvantages.

DE-U-9.400.300 discloses a single command tap made in two parts, an upper part used for mixing and a lower part, separate and distinct from the upper part, used for connecting the feed pipes. In this case too, therefore, the anchoring means are not made in the cartridge body, and hence the aforesaid disadvantages are not resolved.

DE-A-3.824.418, which represents the most pertinent prior art, discloses a single command tap comprising a hollow monoblock body inside which a mixer cartridge, of the type with ceramic disks, is housed. In the embodiment described in said document, the feed pipes are connected to the cartridge, but, in order to attach and position said pipes, front washers, arranged outside the cartridge, and a closing plate, attached to the monoblock body of the tap, are necessary. Therefore, this solution also requires anchoring means which are separate from the cartridge body and furthermore does not allow to use monoblock bodies for the tap which are open at the lower part.

Applicant has devised and embodied the present invention to overcome these disadvantages and to obtain other advantages.

### SUMMARY OF THE INVENTION

The present invention is set forth and characterized in the main claim, while the dependent claims describe other innovative characteristics of the invention.

The purpose of the invention is to achieve a delivery and mixing device for fluids, comprising a monoblock body, inside which a mixer valve is able to be arranged, of the cartridge type, which does not need anchoring means arranged outside said mixer valve in order to position the feed pipes that feed the fluid.

In accordance with this purpose, and according to a characteristic feature of the present invention, the device comprises anchoring means integrated with the mixer valve, and able to allow the feed pipes to be connected and positioned directly on the mixer valve.

According to the invention, the anchoring means are arranged, in a first embodiment, completely inside the mixer valve; according to a variant, the anchoring means are at least partly outside the mixer valve.

Since the anchoring means of the feed pipes are integrated with the mixer valve, with the present invention it is therefore possible to intervene on the feed pipes without necessarily having to release them from the mixer valve and without having to act on any element associated with the monoblock body of the tap; it is possible to use flexible pipes inserted from above, before the mixer valve is positioned, even including connections with hexagonal nuts; and it is not necessary to provide, inside the monoblock body, an attachment and positioning base for the pipes and for the valve. These advantages allow to reduce the times and costs of production, assembly and maintenance.

To be more exact, the possibility of not providing a lower positioning and supporting base allows to make a monoblock body for the tap which is open at the lower part, with an inner seating to house the mixer valve, directly communicating with the zone where it couples with the sanitary installation. The lower surface of the mixer valve closes, inside the monoblock body, the inner seating with respect to the outside of the monoblock body. This allows to reduce the raw material that has to be used to make the monoblock body, and to facilitate the chrome plating operations, preventing any possible stagnation of liquids which can create a consequent and undesirable pollution of the mixed water delivered.

### BRIEF DESCRIPTION OF THE DRAWINGS

These and other characteristics of the present invention will become apparent from the following description of some preferential forms of embodiment, given as a non-restrictive example, with reference to the attached drawings wherein:
- fig. 1 is a sectioned side view of a delivery and mixing device for a fluid according to the present invention;
- fig. 2 is a longitudinal section of an enlarged detail of the device in fig. 1;
- fig. 3 shows a section from III to III of fig. 1;
- fig. 4 shows a first variant of fig. 3;
- fig. 5 shows a second variant of fig. 3;
- fig. 6 shows a third variant of fig. 3;
- fig. 7 shows a fourth variant of fig. 3;
- fig. 8 shows a fifth variant of fig. 3;
- fig. 9 shows a sixth variant of fig. 3.

### DETAILED DESCRIPTION OF THE DRAWINGS

The attached figures show a delivery and mixing device according to the present invention to deliver and mix two flows of a fluid, in this case a tap 10, for example to deliver and mix hot water and cold water in a sanitary apparatus for domestic use, not shown here.

The tap 10 comprises a monoblock body 11 provided with an inner seating 12, inside which is arranged, clamped so that it cannot rotate, a mixer valve, of the type with a cartridge 13, comprising a hollow cartridge body 213.

The monoblock body 11 of the tap 10 can be of any shape, is advantageously made of metal material, in this case able to be enhanced with suitable known means, and comprises a delivery pipe 111, an outlet hole 211 for the mixed water and a lower aperture 311 through which the relative feed pipes 19 and 20 to feed the fluid pass. The monoblock body 11 is of the type open at the lower part, wherein the inner seating 12 is through and is directly connected through the aperture 311 to the relative part of the sanitary apparatus on which the tap 10 is applied.

The inner seating 12 defines, in an intermediate position, an annular neck 112 able to allow the mixer cartridge 13 to rest thereon. The lower surface 113 of the mixer cartridge 13 therefore closes the inner seating 12 of the monoblock body 11 with respect to the outside, defining, below it, a free space 411 through which the feed pipes 19 and 20 pass without constraint.

In this way, the feed pipes 19 and 20, passing through the lower aperture 311, are anchored directly to the lower surface 113 of the mixer cartridge 13 without any auxiliary element and/or inner parts of the monoblock body 11 being located between.

The cartridge body 213 is advantageously made of plastic material and comprises inside, in a substantially known manner, platelets 14 and 15 made of ceramic material or similar, superimposed one on top of the other, of which respectively one is fixed 15 and one is movable 14.

The platelets 14 and 15 have mating holes, associated with the feed pipes 19 and 20, respectively for the hot water and the cold water, and another hole, not shown here, through which the mixed water exits. By means of a command lever, also not shown in the drawings, connected to a pin 16, the user can modify the position of the movable platelet 14 with respect to the fixed platelet 15, in order to vary the delivery and temperature of the water coming out.

The mixer cartridge 13 also comprises two tubes 17 and 18, mounted at least partly inside the cartridge body 213 and able to allow the feed pipes 19 and 20 to be connected and positioned directly on the mixer cartridge 13 itself. To be more exact, the two tubes 17 and 18 are arranged in respective housing seatings 25 and 26 made inside the cartridge body 213, and extend vertically downwards in correspondence with the lower surface 113.

The tubes 17 and 18, according to variants of the present invention, can also be positioned at an angle or orthogonal with respect to the longitudinal axis of the mixer cartridge 13.

Each of the tubes 17 and 18 is advantageously made of metal material and comprises an insertion and clamping hole 21 for example with a screw, for a respective feed pipe 19 or 20.

Each hole 21 has a diameter of a size mating with the outer size of the respective feed pipe 19 or 20 to be inserted and clamped.

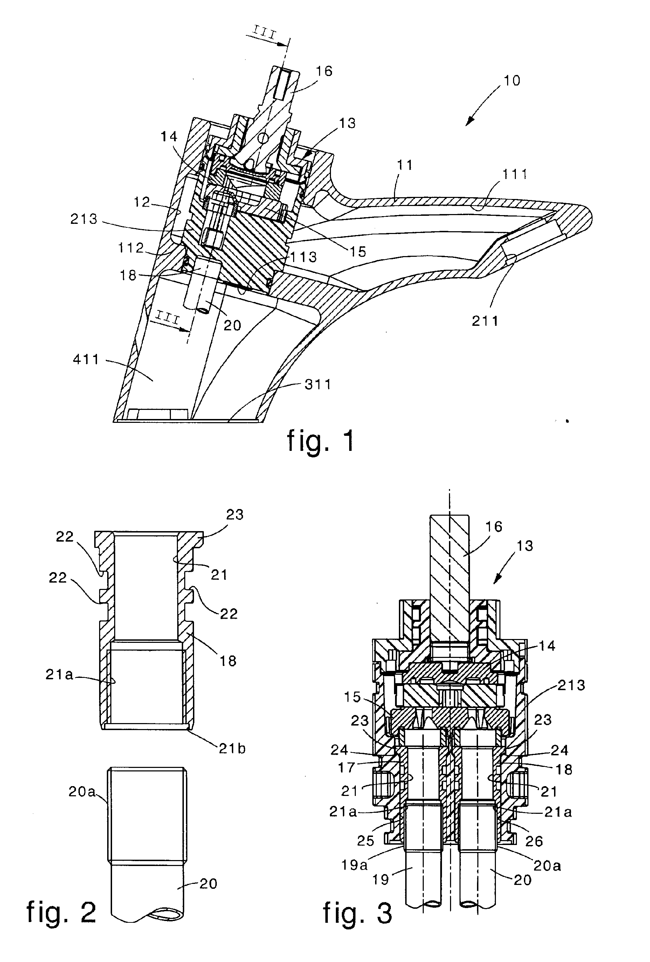

The clamping of the feed pipe 19 or 20 in the respective hole 21 is guaranteed by a threaded terminal zone 19a or 20a, able to cooperate with a respective terminal zone 21a of the hole 21. The coupling of the tube 17 or 18 and the respective feed pipe 19 or 20 is guaranteed watertight by means of a washer, of a known type and not shown in the drawings, such as for example an O-ring, or suchlike, which is housed inside a seating 21b (fig. 2), made at the end of the terminal zone 21a.

On the outer circular surface of each tube 17, 18, moreover, a plurality, in this case two, of circumferential seatings 22 are made, able to house respective sealing packings, of a known type, for example O-rings or suchlike.

To be more exact, as shown in figs. 2 and 3, each of the two tubes 17 and 18, in correspondence with its upper surface, has a supporting circular edge 23 able to cooperate with a shoulder 24 made inside the cartridge body 213, in correspondence with the upper end of the housing seatings 25 and 26. The two tubes 17 and 18 are mounted from above, and in this way the stable coupling of the tubes 17 and 18 and the respective housing seatings 25 and 26 of the mixer cartridge 13 is guaranteed.

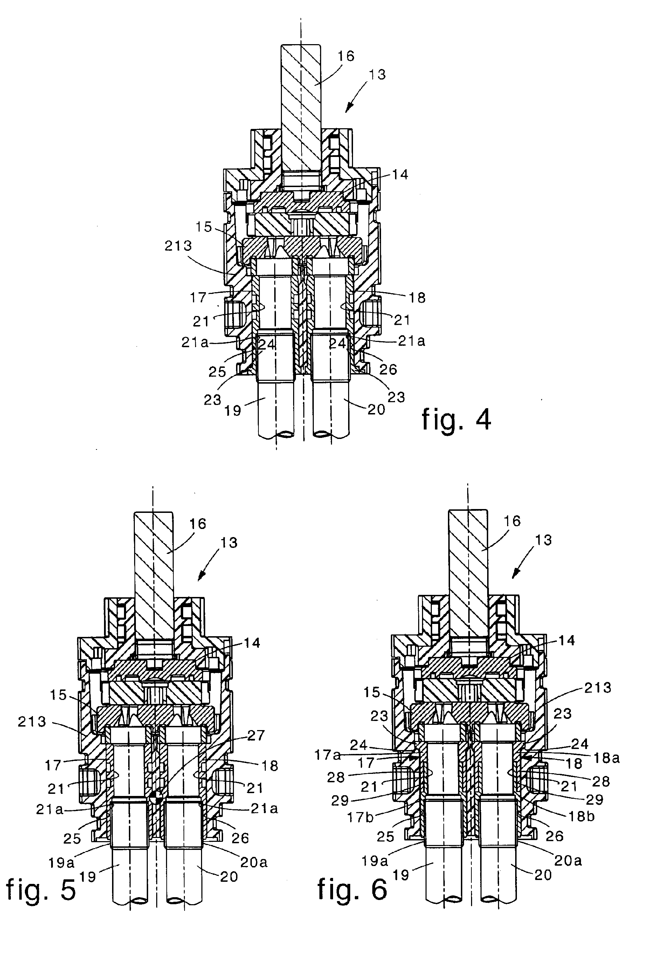

Fig. 4 shows a first variant of the mixer cartridge 13, wherein the circular edge 23 is arranged in correspondence with the lower end of each tube 17 and 18, and the shoulder 24 is made in correspondence with the lower end of each housing seating 25 and 26. In this way, the tubes 17 and 18 are mounted from below, and thus the operations to maintain and replace the tubes 17 and 18 are facilitated.

The clamping of the tubes 17 and 18 in the seatings 25 and 26 can be obtained by means of interference, glues or mechanical means.

According to the variant shown in fig. 5, the two tubes 17 and 18 are attached inside the cartridge body 213 by means of a metal pin 27 which is inserted after the two tubes 17 and 18 have been positioned inside the respective housing seatings 25 and 26.

According to the variant shown in fig. 6, each tube 17 and 18 has respective first upper parts 17a and 18a, and second lower parts 17b and 18b.

Every first part 17a and 18a has at the upper part a circular edge 23 able to cooperate with the corresponding shoulder 24 of the housing seatings 25 and 26, and at the lower part first threaded means 28.

Every second part 17b and 18b is provided at the lower part with the threaded zone 21a, so as to clamp the respective feed pipe 19 or 20, and at the upper part with second means 29, also threaded, able to cooperate with the first means 28 so as to clamp the second parts 17b and 18b to the respective first parts 17a and 18a, and possibly with respect to the mixer cartridge 13.

In this way, the second part 17b and 18b of each tube 17 and 18 is easily interchangeable according to the diameter of the feed pipes 19 or 20, or the type of threading made on their terminal zones 19a or 20a, or in the event of breakage.

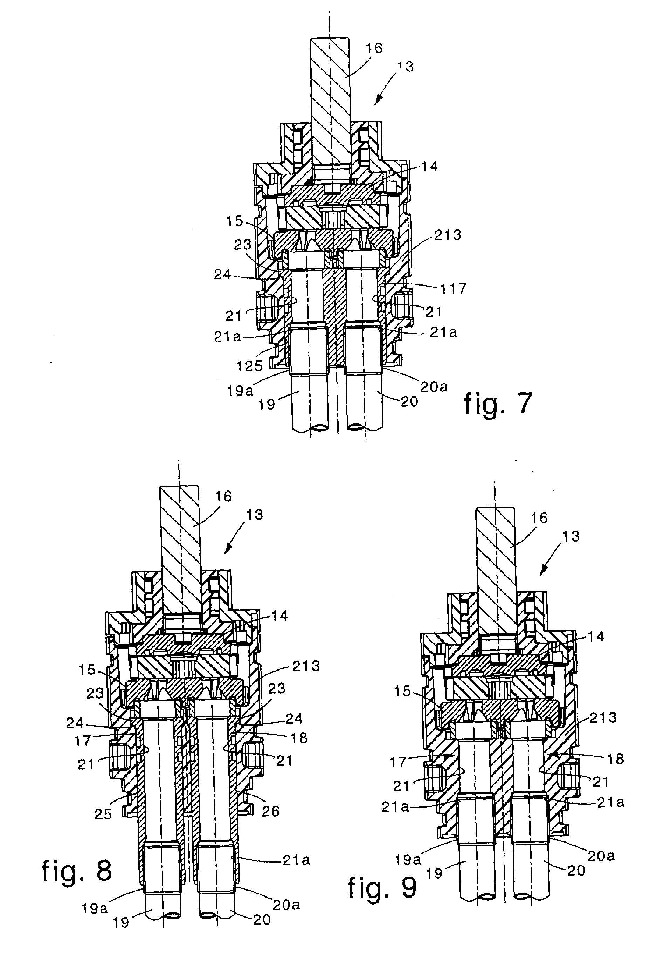

As shown in the further solution of fig. 7, a single element 117, or tube, may be arranged in a single housing seating 125, and provided with two holes 21 for the insertion and clamping of two feed pipes 19 and 20.

According to this variant, the single element 117 is advantageously oval in shape.

In the variant shown in fig. 8, the tubes 17 and 18 have their lower end partly emerging from the cartridge body 213, so as to allow, under particular operating conditions, an easier insertion and clamping of the feed pipes 19 and 20 in the respective holes 21.

The embodiment shown in fig. 8 also allows to provide in the protruding part of the tubes 17 and 18 appropriate gripping seatings for keys or other temporary clamping elements, not shown here.

In the further variant shown in fig. 9, the tubes 17 and 18 are made in a single piece with the cartridge body 213, so as to prevent them from accidentally becoming disassociated from the cartridge body 213 itself.

According to the present invention, thanks to the tubes 17, 18 or 117 which are integrated into the mixer cartridge 13, the feed pipes 19 and 20 are connected and positioned directly on the cartridge body 213, hence without needing to provide any other element to determine, even partly, the positioning and/or connection of said pipes to the whole tap 10.

Moreover, the monoblock body 11 of the tap 10 is open at the lower part and defines a free space 411 between the lower surface 113 of the mixer cartridge 13 and the lower aperture 311 in which the feed pipes 19 and 20 are free to pass and position themselves correctly with respect to the mixer cartridge 13 itself.

It is clear, however, that modifications and/or additions of parts can be made to the device 10 as described heretofore, without departing from the field and scope of the present invention.

It is also clear that, although the invention has been described with reference to specific examples, a person of skill in the art shall certainly be able to achieve many other equivalent forms of delivery and mixing device for fluids, all of which shall come within the field and scope of the invention.

## Claims

1. Delivery and mixing device for fluids, comprising a monoblock body (11) and a mixer valve (13) of the type with a cartridge provided with a hollow cartridge body (213) able to be arranged inside an inner seating (12) of said monoblock body (11), at least a feed pipe (19, 20) for said fluids being associated with said mixer valve (13), **characterized in that** it comprises anchoring means (17, 18) integrated with said mixer valve (13) and able to allow said at least one feed pipe (19, 20) to be connected and positioned directly on said mixer valve (13).

2. Device as in claim 1, **characterized in that** said inner seating (12) is through in said monoblock body (11) and is open at the lower part by means of an aperture (311), said cartridge body (213) having a base (113) that closes said inner seating (12) with respect to the outside, between said base (113) and said aperture (311) there being a free space (411) wherein said feed pipes (19, 20) can pass and be positioned.

3. Device as in claim 1 or 2, **characterized in that** said anchoring means (17, 18) are arranged completely inside said cartridge body (213).

4. Device as in claim 1 or 2, **characterized in that** said anchoring means (17, 18) are arranged at least partly outside said cartridge body (213).

5. Device as in claim 4, **characterized in that** the outer part of said anchoring means (17, 18) has elements to temporarily clamp said feed pipes (19, 20).

6. Device as in any claim hereinbefore, **characterized in that** said anchoring means comprise at least a tube (17, 18) arranged in a relative housing seating (25, 26) made inside said cartridge body (213), and include at least an insertion hole (21), open towards said base (113) and provided with clamping means (21a) able to cooperate with an end (19a, 20a) of a corresponding feed pipe (19, 20).

7. Device as in claim 6, **characterized in that** said end (19a, 20a) of said feed pipe (19, 20) is at least partly threaded, and **in that** said clamping means comprise at least a threaded part (21a) to which said end (19a, 20a) of said feed pipe (19, 20) is able to be screwed.

8. Device as in claim 6, **characterized in that** said tube (17, 18) comprises at one end a supporting circular edge (23) able to cooperate with a shoulder (24) made at a corresponding end of said housing seating (25, 26).

9. Device as in claim 6, **characterized in that** a metal pin (27) is able to cooperate with said tube (17, 18) and with said cartridge body (213) in order to guarantee the stability of the reciprocal coupling.

10. Device as in claim 6, **characterized in that** said tube (17, 18) comprises a first upper part (17a, 18a) arranged solidly inside said housing seating (25, 26), and a second lower part (17b, 18b), to which said feed pipe (19, 20) is attached, able to be selectively coupled with said first part (17a, 18a) by means of threaded means (28, 29).

11. Device as in claim 6, **characterized in that** said tube (17, 18) is made in a single piece with said cartridge body (213).
